Europäisches Patentamt

European Patent Office

Office européen des brevets

(19)

(11) Numéro de publication : **0 042 831**
**B1**

# (12) FASCICULE DE BREVET EUROPÉEN

(45) Date de publication du fascicule du brevet : 18.01.84

(51) Int. Cl.³ : **C 08 J   5/18, C 08 L  23/04**

(21) Numéro de dépôt : 81870031.2

(22) Date de dépôt : 17.06.81

(54) **Film d'emballage thermoscellable à joint pelable et emballages.**

(30) Priorité : 20.06.80 GB 8020329

(43) Date de publication de la demande :
30.12.81 Bulletin 81/52

(45) Mention de la délivrance du brevet :
18.01.84 Bulletin 84/03

(84) Etats contractants désignés :
AT BE CH DE FR GB IT LI LU NL SE

(56) Documents cités :
DE-A- 2 843 987
FR-A- 2 137 984
FR-A- 2 333 827
GB-A- 1 093 671
US-A- 3 201 498
US-A- 3 478 131

(73) Titulaire : **U C B, S.A.**
**326, Avenue Louise**
**B-1050 Bruxelles (BE)**

(72) Inventeur : **Heiremans, Robert**
**7, Zonnestraat**
**B-9910 Marlakerke (BE)**
Inventeur : **Jacobs, Roland**
**39, Schoorstraat**
**B-9200 Wetteren (BE)**
Inventeur : **D'Hondt, Marc**
**2100, Heirweg-Oudenaerde**
**B-9730 Nazareth (BE)**

(74) Mandataire : **Vanderborght, Henri et al**
**U C B, S.A. Département D.T.B. 33, rue d'Anderlecht**
**B-1620 Drogenbos (BE)**

Jouve, 18, rue St-Denis, 75001 Paris, France

### Film d'emballage thermoscellable à joint pelable et emballages

La présente invention se rapporte à un film d'emballage thermoscellable produisant un joint pelable lorsqu'il est thermoscellé sur du polystyrène. Elle concerne également un emballage comprenant un récipient en polystyrène ou en polystyrène choc et une feuille de recouvrement pour ledit récipient réalisée à partir du ou comprenant le film d'emballage thermoscellable précité. Cet emballage peut servir en particulier, mais non exclusivement, pour le conditionnement des denrées alimentaires.

Pour le conditionnement des produits liquides et pâteux, tels que les produits laitiers (yaourts, crèmes, fromages frais, crèmes glacées, etc.), la charcuterie, les plats cuisinés surgelés, etc. on utilise actuellement des récipients de formes diverses en polystyrène. Ces récipients sont fabriqués en partant de films, de feuilles ou de plaques de polystyrène ou de polystyrène choc, auxquels on donne la forme voulue par exemple par thermoformage. Ces récipients comportent en général un fond et une paroi latérale qui s'étend de ce fond vers le haut en formant ainsi une sorte de cuvette de forme cylindrique, tronconique, carrée, rectangulaire, voire même polygonale suivant la nature de l'article devant être conditionné.

La fermeture hermétique de ces récipients en polystyrène est en général assurée par une feuille protectrice de recouvrement. A cet effet, la paroi latérale de ces récipients se termine en son extrémité supérieure par un rebord plan orienté radialement vers l'extérieur, la feuille de recouvrement est posée à plat sur le rebord en polystyrène et scellée, sous pression et à une température élevée. Cette opération de thermoscellage se fait généralement sur un ensemble de récipients, cet ensemble étant, ou non, découpé après le thermoscellage, pour être vendu sous la forme d'une seule unité d'emballage ou sous la forme d'un ensemble comportant un certain nombre d'unités d'emballages.

Jusqu'à présent on a utilisé comme feuille de recouvrement pour ces récipients en polystyrène, des feuilles d'aluminium d'une épaisseur d'au moins 30 micromètres ou des laminés composés d'une telle feuille d'aluminium et d'un ou plusieurs films de nature différente, par exemple un film de polyester. Ces feuilles d'aluminium sont en outre munies d'un vernis ou d'un enduit qui permet leur thermoscellage contre le rebord en polystyrène.

En général, la fermeture ainsi réalisée est suffisante pour maintenir l'intégrité et l'étanchéité de l'emballage au cours de sa manipulation normale, son transport et son stockage. Par ailleurs, l'intégrité de l'emballage ne peut être rompu aux joints que par l'usager, au moment où il désire utiliser l'article emballé.

Toutefois, cette méthode de fermeture des récipients en polystyrène présente plusieurs inconvénients.

A l'usage, on constate en effet que l'ouverture de ces emballages présente un certain nombre de difficultés. Lorsque l'utilisateur essaie d'ouvrir l'emballage pour avoir accès à son contenu en exerçant une force de traction sur la feuille de recouvrement pour la séparer du rebord du récipient, il constate fréquemment que la feuille ne se détache que partiellement du pourtour du rebord du récipient. A un certain moment, le joint thermoscellé ne cède plus et la feuille de recouvrement se déchire, une portion de celle-ci restant solidement accrochée au rebord du récipient. Cette difficulté provient du fait que la résistance mécanique du joint formé entre l'aluminium verni et le polystyrène est supérieure à la résistance à la déchirure de la feuille d'aluminium.

Un autre désavantage de cette méthode de fermeture est que pour obtenir un joint thermoscellé suffisamment solide entre la feuille d'aluminium vernie et le rebord en polystyrène, il est nécessaire de pratiquer le scellage à des températures très élevées de l'ordre de 200 °C à 250 °C.

Il serait donc intéressant de trouver une méthode de fermeture plus commode des récipients en polystyrène et qui ne présente pas ces inconvénients.

Actuellement, il existe diverses méthodes qui permettent de réaliser des joints de fermeture dits « pelables ». Des joints de cette nature possèdent à la fois une résistance mécanique suffisamment élevée pour maintenir l'emballage intact jusqu'au moment où il doit être ouvert par le consommateur, mais suffisamment faible pour permettre une ouverture manuelle de l'emballage sans l'utilisation d'un instrument auxiliaire.

Selon une de ces méthodes, on utilise des compositions adhésives spécialement conçues pour sceller l'emballage par un joint de faible résistance. Ainsi par exemple dans le brevet britannique 1.093.671, on propose des compositions adhésives thermoscellables au moyen desquelles on peut réaliser des joints pelables entre des matériaux d'emballage divers (papier, carton, films de polyéthylène, etc.). Ces compositions sont constituées essentiellement de deux composants : d'une part, un copolymère éthylène-acétate de vinyle et d'autre part, un polymère ou copolymère d'un monomère monoéthyléniquement insaturé, par exemple du polystyrène.

L'inconvénient majeur de cette méthode est de devoir disposer de compositions adhésives particulières pour la réalisation des joints pelables. En outre, cette méthode nécessite une opération supplémentaire d'enduction des compositions sur au moins une face des matériaux d'emballage. En effet, ces compositions ne sont pas filmogènes et, dès lors, elles doivent obligatoirement être déposées au préalable sur un matériau de support.

La demanderesse a tenté de préparer par extrusion-soufflage un film d'emballage à partir d'une composition proposée dans ce brevet et comprenant une partie en poids d'un copolymère éthylène-acétate de vinyle contenant 28 % en poids d'acétate de vinyle (ELVAX 260) et une partie en poids de polystyrène. Mais, il s'est avéré que cette composition ne se prêtait absolument pas à la formation d'un tel film.

Une autre méthode, plus perfectionnée, consiste à former par thermoscellage des joints pelables directement entre deux films d'emballage, c'est-à-dire sans l'intervention d'une composition adhésive. Mais, dans cette technique la difficulté est de trouver des films d'emballage qui sont capables de former entre eux par thermoscellage un joint pelable.

Or, avec la plupart des films d'emballage existant actuellement, il n'est pas possible de réaliser des joints pelables sur du polystyrène. En général, il ne se produit pas de joint du tout, ou au mieux, un joint dont la résistance mécanique est insuffisante, ce qui a pour conséquence que l'emballage ne résiste pas aux sollicitations extérieures au cours de sa manipulation normale et qu'il peut s'ouvrir facilement par accident.

Dans le brevet belge 783.563, on décrit un film d'emballage thermoscellable qui a la propriété de pouvoir produire un joint pelable lorsqu'il est thermoscellé sur lui-même ou sur des films d'emballage les plus divers, plus particulièrement sur des films de polyéthylène basse ou haute densité, de polypropylène et de polybutène. La résistance mécanique assurant la pelabilité du joint est obtenue par un choix judicieux des constituants polymères entrant dans la composition du film. Toutefois, les films proposés dans ce brevet ne permettent pas de réaliser des joints pelables sur du polystyrène.

Il reste donc intéressant de trouver un film dont la constitution chimique est telle qu'il puisse produire un joint pelable sans défauts lorsqu'il est thermoscellé sur du polystyrène.

Mais, pour atteindre cet objectif, il ne suffit pas de trouver une composition filmogène assurant la formation d'un joint pelable sur du polystyrène. En effet, il faut que le film puisse en outre être fabriqué aisément par les méthodes conventionnelles d'extrusion et plus particulièrement par extrusion-soufflage. Dans le même esprit, il faut que le film ainsi confectionné présente les propriétés physiques courantes d'un film d'emballage c'est-à-dire qu'il possède de bonnes propriétés de souplesse, de résistance au choc, de résistance à la déchirure, etc. En outre, il faut que ce film puisse être bobiné, laminé, thermoscellé et imprimé sans difficultés sur les machines conventionnelles. Enfin, suivant un autre aspect, il faut que le coût du film soit aussi faible que possible.

C'est à la solution de ces divers problèmes que se rapporte la présente invention, dont un premier objet est d'apporter un excellent film d'emballage capable de produire un joint pelable lorsqu'il est thermoscellé sur du polystyrène. Plus particulièrement la présente invention a pour objet d'apporter un film d'emballage qui peut, grâce à cette propriété, être utilisé utilement comme feuille de recouvrement pour assurer la fermeture hermétique des récipients en polystyrène ou en polystyrène choc, sans qu'il ne présente les divers inconvénients rappelés plus haut.

Ces divers objets sont atteints conformément à la présente invention par l'apport d'un film d'emballage thermoscellable produisant un joint pelable, qui est caractérisé par une composition comprenant :

(a) 50 à 70 % en poids d'au moins un polymère d'éthylène ayant un indice de fluidité de 0,5 à 7 g/10 min et qui est choisi parmi du polyéthylène ayant une densité de 0,910 à 0,925 g/cm³ et un copolymère éthylène-acétate de vinyle contenant au plus 7 % en poids d'acétate de vinyle,

(b) 20 à 30 % en poids d'au moins un copolymère éthylène-acétate de vinyle contenant 20 à 30 % en poids d'acétate de vinyle et ayant un indice de fluidité de 0,5 à 7 g/10 min, et

(c) 10 à 20 % en poids d'un homopolymère de styrène ayant un indice de fluidité de 0,5 à 7 g/10 min.

Un film de cette composition produit effectivement un joint pelable parfait lorsqu'il est thermoscellé sur du polystyrène. On constate en effet que le joint ainsi obtenu sur du polystyrène présente les caractéristiques suivantes :

(1) sa résistance au pelage est comprise entre 300 et 800 g par cm de largeur de joint. Cette résistance est à la fois suffisamment élevée pour maintenir l'emballage intact jusqu'au moment où il est ouvert par l'usager et suffisamment faible pour permettre une ouverture manuelle de l'emballage sans l'utilisation d'un instrument auxiliaire quelconque ;

(2) il peut être rompu à l'interface entre le film et le polystyrène ayant été utilisés pour sa formation, sans que se produise une déchirure ou une déformation quelconque dans le matériau de l'un de ceux-ci ;

(3) il peut être rompu de manière homogène, c'est-à-dire sans dépôt irrégulier de résidus du film sur la face du polystyrène, ou inversement, de polystyrène sur la face du film ayant servi à sa formation ;

(4) il peut être rompu par une simple traction manuelle, sans avancement par saccades.

Un autre objet de l'invention est de procurer un emballage, plus perfectionné, comprenant un récipient en polystyrène ou en polystyrène choc et une feuille de recouvrement pour ledit récipient qui assure non seulement une fermeture hermétique du récipient par un thermoscellage dans des conditions modérées, mais également et surtout, une ouverture manuelle facile et commode, en ce sens que l'on ne rencontre pas les difficultés observées avec les feuilles de recouvrement utilisées jusqu'ici.

**0 042 831**

Cet objet est atteint conformément à la présente invention en apportant un emballage comprenant (1) un récipient en polystyrène ou en polystyrène choc possédant un fond et une paroi latérale qui s'étend de celui-ci vers le haut et qui se termine en son extrémité supérieure par un rebord orienté radialement vers l'extérieur et (2) une feuille de recouvrement pour ledit récipient, qui est thermoscellé audit rebord au moyen d'un joint pelable, cet emballage étant caractérisé en ce que la feuille de recouvrement est réalisée à partir d'un film d'emballage thermoscellable ayant une composition telle que définie plus haut.

Cet emballage présente de nombreux avantages par rapport à ceux de l'état de la technique. En effet, lorsque l'utilisateur l'ouvre pour avoir accès à son contenu, il n'éprouve aucune difficulté ; par une simple traction manuelle il peut détacher la feuille de recouvrement progressivement de tout le pourtour du rebord en polystyrène du récipient sans que se produise une déchirure dans le matériau de la feuille, étant donné que le joint formé par thermoscellage entre la feuille de recouvrement et le rebord en polystyrène est un joint pelable qui possède les caractéristiques (1) à (4) citées plus haut. En outre, après le remplissage du récipient avec les articles à conserver, celui-ci peut être fermé avec la feuille de recouvrement au moyen d'appareils simples et peu spécifiques de thermoscellage, étant donné que l'on peut obtenir d'excellents joints pelables à des températures de scellage comprises entre 150 et 200 °C et en utilisant des pressions de scellage inférieures à 98 N/cm$^2$, à la différence des feuilles d'aluminium vernies, qui nécessitent des températures et des pressions de scellage supérieures. Enfin, il n'est plus nécessaire d'utiliser pour sa confection des feuilles d'aluminium d'au moins 30 micromètres d'épaisseur munies d'un vernis thermoscellable, ce qui constitue un avantage économique important. Ceci ne veut pas dire que l'on ne peut pas produire un laminé entre le film conforme à l'invention et une feuille d'aluminium et utiliser le laminé ainsi confectionné comme feuille de recouvrement. Mais dans ce cas, on peut se servir d'une feuille d'aluminium beaucoup plus mince, par exemple d'une épaisseur de 9 micromètres ou moins, étant donné que c'est le film conforme à l'invention qui aura pour fonction de produire un joint pelable sur le rebord du récipient tandis que la feuille d'aluminium ne jouera qu'un rôle secondaire, tel que par exemple celui de conférer un aspect plus décoratif à l'emballage. Le même effet peut d'ailleurs être obtenu en déposant une mince couche d'aluminium par métallisation sous vide sur la face extérieure de la feuille de recouvrement.

D'autres avantages apparaîtront à la lecture de la description ci-après.

La composition chimique du film d'emballage conforme à l'invention est particulièrement critique.

Le constituant (a) du film conforme à l'invention est soit un polyéthylène ayant une densité de 0,910 à 0,925 g/cm$^3$, donc un polyéthylène basse densité, soit un copolymère éthylène-acétate de vinyle dont la teneur en acétate de vinyle représente au maximum 7 % en poids, soit leurs mélanges. On a observé en effet que lorsqu'on utilise comme constituant (a) un copolymère éthylène-acétate de vinyle dont la teneur en acétate de vinyle dépasse 7 % en poids, le film obtenu est tellement collant que son traitement sur les machines de fabrication et de transformation n'est pratiquement plus possible.

En outre, ces polymères d'éthylène doivent avoir un indice de fluidité compris entre 0,5 et 7 g/10 min. En effet, lorsqu'on utilise un polymère d'éthylène dont l'indice de fluidité tombe en dehors de l'intervalle précité, on n'obtient plus le résultat souhaité. Ainsi par exemple, lorsqu'on utilise un polymère d'éthylène ayant un indice de fluidité de 0,3 ou 0,2 g/10 min, la résistance du joint obtenu par thermoscellage du film sur une feuille de polystyrène est inférieure à 200 g par cm de largeur de joint, ce qui est absolument insuffisant en pratique pour assurer une fermeture hermétique d'un emballage.

La quantité du constituant (a) entrant dans la composition du film représente 50 à 70 % en poids, de préférence 60 à 65 % en poids par rapport au poids total des polymères présents.

Le constituant (b) du film conforme à l'invention est choisi parmi les copolymères éthylène-acétate de vinyle dont la teneur en acétate de vinyle est comprise entre 20 et 30 % en poids et qui possèdent un indice de fluidité de 0,5 à 7 g/10 min. La teneur en acétate de vinyle de ces copolymères est particulièrement critique. Il a été observé en effet que lorsqu'on utilise un copolymère éthylène-acétate de vinyle qui ne contient pas la teneur indiquée en acétate de vinyle, par exemple une quantité d'acétate de vinyle de 18 % en poids, la résistance du joint réalisé sur le polystyrène est insuffisante (inférieure à 200 g/cm de largeur de joint). En outre, ces copolymères éthylène-acétate de vinyle sont obligatoirement présents dans la composition du film conforme à l'invention en une quantité de 20 à 30 % en poids, de préférence 25 à 30 % en poids par rapport au poids total des polymères présents. En effet, en-dessous de la limite inférieure de 20 % en poids et au-dessus de la limite supérieure de 30 % en poids, il n'est plus possible d'obtenir des joints pelables sur du polystyrène. De plus, au-delà d'une quantité de 30 % en poids, le film est excessivement collant et se prête difficilement aux opérations d'extrusion-soufflage, de bobinage et de laminage.

Le constituant (c) du film conforme à l'invention est un homopolymère de styrène ayant un indice de fluidité de 0,5 à 7 g/10 min. Il est obligatoirement présent dans la composition du film en une quantité de 10 à 20 % en poids, de préférence 10 % en poids par rapport au poids total des polymères présents. Lorsque sa teneur dans la composition du film est trop faible, par exemple 5 % en poids ou moins, le film obtenu présente un certain collant, ce qui entraîne des complications sérieuses lors des opérations d'extrusion, de bobinage et de laminage du film. Ainsi, on constate que lors du bobinage le film présente une tendance à adhérer aux bobines, tandis que lors du laminage, le film a tendance à former des faux plis. D'autre part, il n'est pas recommandable de dépasser une quantité de 20 % en poids, parce qu'au-delà de cette quantité, on obtient un film de mauvaise qualité, qui se déchire facilement.

En résumé, il est clair que tant la nature que les proportions respectives des trois constituants (a), (b) et (c) sont essentielles et indispensables non seulement pour l'obtention d'un film capable de produire un joint pelable lorsqu'il est thermoscellé sur du polystyrène, mais aussi pour obtenir un bon film d'emballage qui se prête sans difficultés aux opérations d'extrusion, de bobinage et de laminage sur les machines conventionnelles.

Pour la préparation du film d'emballage conforme à l'invention, les constituants polymères (a), (b) et (c) sont utilisés sous forme de poudres ou de granulés.

La composition du film produisant un joint pelable conforme à l'invention peut comporter en outre les charges et/ou les adjuvants utilisés couramment dans la fabrication de films d'emballage.

Des charges pourront par exemple être ajoutées en vue d'opacifier le film et/ou de lui conférer une dureté supplémentaire. Le talc, le dioxyde de titane, le kaolin, les zéolites, la silice, le mica micronisé, l'oxyde de zinc, l'oxyde d'aluminium, le carbonate de calcium naturel ou précipité, le carbonate de magnésium, la barytine, etc., sont des exemples représentatifs des charges pouvant être ajoutées. Elles se présentent sous forme de poudres dont la dimension de particule ne doit pas être supérieure à 50 micromètres et elles peuvent être ajoutées à la composition du film en des quantités allant jusqu'à environ 10 % en poids par rapport au poids total des constituants polymères (a), (b) et (c).

Les adjuvants comprennent des stabilisants thermiques comme la diphénylthiourée, l'alpha-phénylindol, le palmitate et/ou stéarate de baryum, de cadmium et/ou de zinc, le phosphite de tris-nonylphényle, etc., des antioxydants comme le 4,4'-thio-bis-(6-t-butyl-métacrésol), le 4,4'-méthylène-bis-(2,6-di-t-butyl-phénol), les hydroxytoluènes butylés, etc., des agents de blanchiment optique tels que les dérivés sulfonés du stilbène, des colorants organiques comme les phtalocyanines, les colorants azoïques, les indanthrènes chlorés, etc., des pigments minéraux comme le chromate de zinc, le sulfure de cadmium, l'oxyde de fer, des agents antistatiques, etc., des lubrifiants comme le stéarate de magnésium ou de calcium, l'huile de paraffine, etc. Ces adjuvants peuvent être ajoutés à la composition du film en une quantité allant jusqu'à environ 5 % en poids par rapport au poids total des constituants polymères (a), (b) et (c).

En vue de la fabrication du film à joint pelable conforme à l'invention, les quantités appropriées des polymères et éventuellement des charges et des adjuvants sont homogénéisés entre eux à la température ordinaire dans un mélangeur de construction conventionnelle, de préférence du type rotatif ordinaire.

Un mode approprié d'homogénéisation de ce mélange est de préparer des mélanges-maîtres (« master-batch ») avec au moins un des polymères, les charges et les adjuvants, puis d'homogénéiser les mélanges-maîtres avec les polymères restants.

Le mélange homogène ainsi obtenu est soumis à une extrusion dans un appareil de conception classique dans lequel le mélange est porté à une température atteignant au plus 290 °C.

L'extrudeuse pourra comporter une ou plusieurs vis d'extrusion ; il importe seulement en l'occurrence que la composition obtenue soit homogène à la sortie de la filière.

Chose bien connue de l'homme de métier, les propriétés mécaniques pourront encore être modifiées suivant que l'extrusion se fait à travers une filière plate ou par la technique de l'extrusion avec soufflage. Dans ce dernier cas, la vitesse de refroidissement et le taux de soufflage pourront également être modifiés en fonction des desiderata.

A la sortie de l'extrudeuse, une seule face du film pourra être prétraitée superficiellement à la flamme ou par décharge corona pour la rendre imprimable et/ou laminable sur d'autres films. En d'autres termes, les deux faces du film ne peuvent pas être soumises à ce prétraitement, car dans ce cas, il ne serait plus possible de former des joints pelables au moyen de ce film.

Le film d'emballage conforme à l'invention peut être utilisé tel quel comme matériau d'emballage. Toutefois, ce film est utilisé de préférence sous la forme d'un laminé avec un ou plusieurs autres films d'emballage de nature différente, tels que des films de cellulose régénérée, de polypropylène, de polyamide, de polyester, de polyacrylonitrile, de polystyrène, des feuilles minces d'aluminium, du papier, etc. Dans ces laminés, le film conforme à l'invention se trouve toujours à l'extérieur parce que c'est lui qui doit être utilisé pour la confection d'un joint pelable sur le polystyrène. Autrement dit, il faut qu'au moins une des faces extérieures de ces laminés soit formée par un film ayant une composition telle que définie plus haut.

Pour la formation de ces laminés, on peut utiliser les techniques bien connues de laminage par contre-collage, par extrusion-laminage ou par coextrusion.

Grâce au fait que le film d'emballage conforme à l'invention permet de produire d'excellents joints pelables sur le polystyrène, il constitue un matériau unique pour la réalisation de feuilles de recouvrement destinées à la fermeture hermétique des récipients en polystyrène.

C'est pourquoi, la présente invention concerne également un emballage comprenant un récipient en polystyrène ou en polystyrène choc et une feuille de recouvrement pour ledit récipient réalisée à partir du ou comprenant le film d'emballage précité.

Dans ce nouvel emballage, la forme et les dimensions du récipient en polystyrène ne sont pas critiques. Il est bien entendu nécessaire que ce récipient comporte en plus d'un fond et d'une paroi latérale, un rebord supérieur plan en polystyrène dont la surface est suffisamment grande pour qu'il puisse servir d'assise stable à une feuille de recouvrement et pour que l'on puisse y réaliser un joint de fermeture par thermoscellage. Chose bien connue de l'homme de métier, ce type de récipient peut être fabriqué par thermoformage à partir de films, de feuilles ou de plaques de polystyrène ou de polystyrène choc, dont l'épaisseur est choisie en fonction de la nature de l'article devant être conditionné. par « polystyrène choc », on entend les polystyrènes à haute résistance au choc, qui sont des polystyrènes modifiés avec 5 à 25 % en poids d'un caoutchouc tel que par exemple un caoutchouc de butadiène-styrène ou de polybutadiène.

La caractéristique nouvelle de l'emballage conforme à l'invention réside dans la nature de la feuille de recouvrement utilisée. Conformément à l'invention, cette feuille de recouvrement est constituée soit par le film d'emballage thermoscellable dont la composition a été définie plus haut, soit, de préférence, par un laminé de ce film avec un ou plusieurs films de nature différente comme ceux cités plus haut. Bien entendu, lorsque cette feuille est un laminé, il faut que le film conforme à l'invention constitue au moins une des faces extérieures dudit laminé et que la feuille de recouvrement soit posée et thermoscellée sur le rebord du récipient avec la face appropriée du laminé, étant donné que c'est le film conforme à l'invention qui doit servir pour la confection d'un joint pelable sur ce rebord.

Après remplissage du récipient, cette feuille de recouvrement est scellée, sous pression et à chaud sur son rebord en polystyrène. On réalise ainsi une fermeture étanche par d'excellents joints pelables, lorsque le thermoscellage est effectué à des températures s'échelonnant de 150 à 200 °C. En outre, les joints pelables ainsi formés peuvent être soit des joints à plat lorsqu'on utilise des pressions de scellage variant de 9,8 à 98 N/cm², soit des « joints profilés » lorsqu'on emploie des pressions de scellage variant de 98 à 1 471 N/cm², le temps de scellage étant compris entre 0,5 et 2 secondes. On appelle « joint profilé » un joint obtenu sous une pression élevée à l'aide de mâchoires de scellage, dont l'une ou moins est sous la forme d'un poinçon, en sorte que la feuille de recouvrement présente à l'endroit du joint une ou plusieurs empreintes en creux.

Les exemples qui suivent illustrent l'invention sans la limiter.

Dans les exemples, les films soumis aux essais, sont utilisés sous la forme d'un laminé avec un film de polyester (poly(téréphtalate d'éthylène)). Il est évident que les mêmes résultats peuvent être obtenus avec des films non laminés ou laminés sur d'autres matériaux.

Par ailleurs, dans ces exemples, on utilise un appareil du type MULTIVAC pour réaliser le scellage des joints.

Enfin, les forces de pelage sont mesurées, selon les méthodes classiques, avec un appareil de traction électronique ; les valeurs indiquées pour les indices de fluidité des polymères sont déterminées selon la norme ASTM D-1238 et exprimées en grammes de polymère extrudé en 10 minutes à la température de 190 °C, tandis que les valeurs indiquées pour la densité des polyéthylènes sont déterminées selon la norme ASTM D-792 et D-1505.

Exemple 1

On prépare par extrusion-soufflage un film d'une épaisseur de 50 μm possédant la composition suivante :

(a) 65 % en poids d'un copolymère éthylène-acétate de vinyle contenant 4 % en poids d'acétate de vinyle et ayant un indice de fluidité (M.I.) de 2 (PETROTHENE NA 294 de EXXON C°) ;

(b) 25 % en poids d'un copolymère éthylène-acétate de vinyle contenant 25 % en poids d'acétate de vinyle et ayant un indice de fluidité de 2 (ELVAX 360 de E.I. du PONT de NEMOURS & C°) ; et

(c) 10 % en poids d'un polystyrène, de qualité « cristal », ayant un indice de fluidité de 0,6 (LACQRENE 126 B de AQUITAINE-ORGANICO).

Le film obtenu présente les propriétés physiques courantes d'un film d'emballage. Ainsi, sa résistance à la déchirure, mesurée selon la norme ASTM D-1922 au moyen d'un appareil ELMENDORF, est de 144 g/feuille dans le sens machine et de 112 g/feuille dans le sens transversal. On constate en outre qu'il peut être extrudé, bobiné et laminé sans problèmes.

Ce film est laminé par contre-collage, au moyen d'un adhésif, contre un film de polyester d'une épaisseur de 12 μm.

Au moyen du laminé ainsi préparé, on réalise par thermoscellage des joints entre le film préparé ci-dessus et une feuille de polystyrène d'une épaisseur de 165 μm et on mesure ensuite la force nécessaire pour la séparation (force de pelage en g/cm de largeur de joint) des joints formés à différentes températures de scellage (pression de scellage = 39,2 N/cm² ; temps de scellage = 1 seconde).

Dans le tableau I ci-dessous, on donne les résultats obtenus :

Tableau I

| Température de scellage (°C) | Force de pelage (g/cm) |
|---|---|
| 160 | 530 |
| 180 | 700 |
| 200 | 800 |

6

Les joints obtenus sont parfaitement pelables. En effet, ils peuvent être rompus aisément par une simple traction manuelle sans que le laminé ne se déchire ou ne se détériore par un délaminage et sans que l'on observe des dépôts irréguliers de matériau aux endroits où le joint avait été réalisé. En outre, la rupture de ces joints peut se faire progressivement sans que l'on avance par saccades.

## Exemple 2

On prépare par extrusion-soufflage un film d'une épaisseur de 50 μm possédant la composition suivante :

(a) 65 % en poids d'un polyéthylène ayant une densité de 0,922 g/cm$^3$ et un indice de fluidité (M.I.) de 2 (CARLONA 25020 FA de SHELL C°) ;
(b) 25 % en poids d'un copolymère éthylène-acétate de vinyle contenant 25 % en poids d'acétate de vinyle et ayant un indice de fluidité de 2 (ELVAX 360) ; et
(c) 10 % en poids d'un polystyrène, de qualité « cristal », ayant un indice de fluidité de 0,6 (LACQRENE 126 B).

Les propriétés du film obtenu sont voisines de celles du film préparé à l'exemple 1 ; il peut être extrudé, bobiné et laminé sans difficultés.

Ce film est laminé par contre-collage au moyen d'un adhésif contre un film de polyester d'une épaisseur de 12 μm.

On effectue ensuite des essais similaires à ceux décrits dans l'exemple 1 pour déterminer la pelabilité des joints thermoscellés formés entre le film préparé ci-dessus et une feuille de polystyrène d'une épaisseur de 165 μm. Dans le tableau II ci-dessous, on donne la valeur de la force de pelage à différentes températures de scellage (pression de scellage = 39,2 N/cm$^2$ ; temps de scellage = 2 secondes) :

### Tableau II

| Température de scellage (°C) | Force de pelage (g/cm) |
|---|---|
| 180 | 475 |
| 190 | 500 |
| 200 | 465 |

Les joints obtenus sont excellents au point de vue de leur pelabilité ; ils présentent les mêmes caractéristiques que ceux obtenus à l'exemple 1.

## Exemple 3

On reproduit l'exemple 1, mais en utilisant la composition suivante :

(a) 60 % en poids d'un polyéthylène ayant une densité de 0,922 g/cm$^3$ et un indice de fluidité (M.I.) de 2 (CARLONA 25020 FA) ;
(b) 30 % en poids d'un copolymère éthylène-acétate de vinyle contenant 25 % en poids d'acétate de vinyle et ayant un indice de fluidité de 2 (ELVAX 360) ;
(c) 10 % en poids d'un polystyrène, de qualité « cristal », ayant un indice de fluidité de 0,6 (LACQRENE 126 B).

Le film obtenu n'est pas collant ; il peut être extrudé, bobiné et laminé sans problèmes.

On effectue des essais similaires à ceux décrits dans l'exemple 1, pour déterminer la pelabilité des joints thermoscellés formés entre le film obtenu et une feuille de polystyrène d'une épaisseur de 165 μm.

Au tableau III, on donne la valeur de la force de pelage à différentes températures de scellage (pression de scellage = 39,2 N/cm$^2$ ; temps de scellage = 1 seconde) :

### Tableau III

| Température de scellage (°C) | Force de pelage (g/cm) |
|---|---|
| 180 | 315 |
| 190 | 340 |
| 200 | 350 |

Les joints obtenus présentent les mêmes caractéristiques que ceux obtenus aux exemples 1 et 2.

7

## Exemple 4

On prépare par extrusion-soufflage une série de films (épaisseur : 50 µm) dont la composition est respectivement :

### Film A

(a) 50 % en poids d'un copolymère éthylène-acétate de vinyle contenant 4 % en poids d'acétate de vinyle et ayant un indice de fluidité (M.I.) de 2 (PETROTHENE NA 294) ;
(b) 30 % en poids d'un copolymère éthylène-acétate de vinyle contenant 25 % en poids d'acétate de vinyle et ayant un indice de fluidité de 2 (ELVAX 360) ; et
(c) 20 % en poids d'un polystyrène, de qualité « cristal », ayant un indice de fluidité de 0,6 (LACQRENE 126 B).

### Film B

(a) 70 % en poids d'un copolymère éthylène-acétate de vinyle contenant 4 % en poids d'acétate de vinyle et ayant un indice de fluidité (M.I.) de 2 (PETROTHENE NA 294) ;
(b) 20 % en poids d'un copolymère éthylène-acétate de vinyle contenant 25 % en poids d'acétate de vinyle et ayant un indice de fluidité de 2 (ELVAX 360) ; et
(c) 10 % en poids d'un polystyrène, de qualité « cristal », ayant un indice de fluidité de 0,6 (LACQRENE 126 B).

### Film C

(a) 65 % en poids d'un copolymère éthylène-acétate de vinyle contenant 4 % en poids d'acétate de vinyle et ayant un indice de fluidité (M.I.) de 2 (PETROTHENE NA 294) ;
(b) 25 % en poids d'un copolymère éthylène-acétate de vinyle contenant 28 % en poids d'acétate de vinyle et ayant un indice de fluidité de 6 (ELVAX 260) ; et
(c) 10 % en poids d'un polystyrène, de qualité « cristal », ayant un indice de fluidité de 0,6 (LACQRENE 126 B).

Les trois films ainsi obtenus possèdent des qualités similaires à celles que présentent les films préparés aux exemples précédents ; ils peuvent être extrudés, bobinés et laminés sans problèmes.

Au tableau IV, on donne, pour chaque film, la valeur de sa résistance à la déchirure mesurée comme indiquée à l'exemple 1 :

### Tableau IV

| Film testé | | Résistance à la déchirure (g/feuille) |
|---|---|---|
| A | SM | 56 |
| | ST | 43 |
| B | SM | 132 |
| | ST | 112 |
| C | SM | 144 |
| | ST | 112 |

SM = sens machine
ST = sens transversal

Chaque film est laminé par contre-collage, au moyen d'un adhésif, contre un polyester d'une épaisseur de 12 µm.

Au moyen des trois laminés ainsi préparés, on réalise par thermoscellage des joints entre respectivement le film A, B ou C et une plaque de polystyrène d'une épaisseur de 600 µm.

Au tableau V, on donne la valeur de la force de pelage à différentes températures de scellage (pression de scellage = 49 N/cm² ; temps de scellage = 2 secondes) pour les trois films A, B et C.

(Voir Tableau V, page 9)

Tableau V

| Joints formés avec le film | Force de pelage (g/cm) | | |
|---|---|---|---|
| A | 300 | 350 | 400 |
| B | 300 | 300 | 320 |
| C | 310 | 320 | 420 |
| Température de scellage (°C) | 170 | 180 | 200 |

Les joints obtenus possèdent les mêmes caractéristiques que ceux obtenus aux exemples précédents.

Exemple 5 (comparatif)

On prépare par extrusion-soufflage une série de films non conformes à l'invention (épaisseur : 50 μm) dont la composition est respectivement :

(I) la composition de l'exemple 1 dans laquelle on a remplacé le constituant (a) par la même quantité d'un copolymère éthylène-acétate de vinyle contenant 8 % en poids d'acétate de vinyle et ayant un indice de fluidité (M. I.) de 2 (BAYLON V 10 H 460 de BAYER A. G.) ;

(II) la composition de l'exemple 1 dans laquelle on a remplacé le constituant (a) par la même quantité d'un copolymère éthylèneacétate de vinyle contenant 2 % en poids d'acétate de vinyle et ayant un indice de fluidité de 0,3 (BAYLON V 22 D 464 de BAYER A. G.) ;

(III) la composition de l'exemple 2 dans laquelle on a remplacé le constituant (a) par la même quantité d'un polyéthylène ayant une densité de 0,923 g/cm³ et un indice de fluidité de 0,2 (LACQTENE 1003 FE de AQUITAINE-ORGANICO) ;

(IV) la composition de l'exemple 1 dans laquelle on a remplacé le constituant (b) par la même quantité d'un copolymère éthylène-acétate de vinyle contenant 18 % en poids d'acétate de vinyle et ayant un indice de fluidité de 2,2-2,8 (ELVAX 460).

(V) a) 75 % en poids d'un copolymère éthylène-acétate de vinyle contenant 4 % en poids d'acétate de vinyle et ayant un indice de fluidité (M. I.) de 2 (PETROTHENE NA 294) ; et
    b) 25 % en poids d'un copolymère éthylène-acétate de vinyle contenant 25 % en poids d'acétate de vinyle et ayant un indice de fluidité de 2 (ELVAX 360).

(VI) a) 70 % en poids d'un copolymère éthylène-acétate de vinyle contenant 4 % en poids d'acétate de vinyle et ayant un indice de fluidité (M. I.) de 2 (PETROTHENE NA 294) ;
    b) 25 % en poids d'un copolymère éthylène-acétate de vinyle contenant 25 % en poids d'acétate de vinyle et ayant un indice de fluidité de 2 (ELVAX 360) ; et
    c) 5 % en poids d'un polystyrène, de qualité « cristal », ayant un indice de fluidité de 0,6 (LACQRENE 126 B).

On constate que le film obtenu par extrusion à partir de la composition (I) n'a pas une épaisseur uniforme. En outre, il était tellement collant qu'il était impossible de procéder aux opérations de laminage et de thermoscellage.

Chacun des films obtenus à partir des compositions (II), (III) et (IV) est laminé par contrecollage au moyen d'un adhésif contre un film de polyester d'une épaisseur de 12 μm, après quoi on effectue des essais similaires à ceux décrits dans l'exemple 1 pour déterminer la pelabilité des joints thermoscellés formés entre ces films et une feuille de polystyrène d'une épaisseur de 165 μm.

Au tableau VI ci-dessous, on donne la valeur de la force de pelage à différentes températures de scellage (pression de scellage = 39,2 N/cm² ; temps de scellage = 2 secondes) pour le film obtenu à partir de la composition (II) :

Tableau VI

| Température de scellage (°C) | Force de pelage (g/cm) |
|---|---|
| 150 | 130 |
| 160 | 180 |
| 170 | 200 |

On constate que les forces de pelage sont insuffisantes. Avec les films obtenus à partir des compositions (III) et (IV) on obtient, dans les meilleures conditions, des joints dont la force de pelage est inférieure à 200 g par cm de joint, ce qui est absolument insuffisant en pratique pour assurer une fermeture hermétique d'un emballage.

Quant aux films obtenus à partir des compositions (V) et (VI), ils sont collants ; leur extrusion s'avère difficile ; en outre, ils présentent une tendance à adhérer aux bobines.

Ces essais montrent clairement que la nature et les proportions des constituants (a), (b) et (c) sont particulièrement critiques pour l'obtention de bons films d'emballage produisant des joints pelables sur du polystyrène.

## Revendications

1. Film d'emballage thermoscellable produisant un joint pelable, caractérisé par une composition comprenant :

(a) 50 à 70 % en poids d'au moins un polymère d'éthylène ayant un indice de fluidité de 0,5 à 7 g/10 min et qui est choisi parmi du polyéthylène ayant une densité de 0,910 à 0,925 g/cm$^3$ et un copolymère éthylène-acétate de vinyle contenant au plus 7 % en poids d'acétate de vinyle,

(b) 20 à 30 % en poids d'au moins un copolymère éthylène-acétate de vinyle contenant 20 à 30 % en poids d'acétate de vinyle et ayant un indice de fluidité de 0,5 à 7 g/10 min, et

(c) 10 à 20 % en poids d'un homopolymère de styrène ayant un indice de fluidité de 0,5 à 7 g/10 min.

2. Film d'emballage selon la revendication 1, caractérisé en ce que la quantité du constituant (a) représente 60 à 65 % en poids, la quantité du constituant (b) représente 25 à 30 % en poids et la quantité du constituant (c) représente 10 % en poids, par rapport au poids total des polymères présents.

3. Film d'emballage selon l'une quelconque des revendications 1 et 2, caractérisé en ce qu'il contient en outre jusqu'à 10 % en poids de charges et jusqu'à environ 5 % en poids d'adjuvants pour films d'emballage, par rapport au poids total des constituants polymères (a), (b) et (c).

4. Film d'emballage thermoscellable produisant un joint pelable, caractérisé en ce que le film est un laminé dont l'une au moins des faces extérieures est réalisée à partir d'un film selon l'une quelconque des revendications 1 à 3.

5. Emballage comprenant (1) un récipient en polystyrène ou en polystyrène choc possédant un fond et une paroi latérale qui s'étend de celui-ci vers le haut et qui se termine en son extrémité supérieure par un rebord orienté radialement vers l'extérieur et (2) une feuille de recouvrement pour ledit récipient, qui est thermoscellé audit rebord au moyen d'un joint pelable, caractérisé en ce que la feuille de recouvrement est réalisée à partir d'un film d'emballage selon l'une quelconque des revendications 1 à 4.

## Claims

1. Heat-sealable packaging film producing a peelable joint, characterised by a composition comprising :

(a) 50 to 70 % by weight of at least one ethylene polymer having a melt index of 0.5 to 7 g/10 min and selected from polyethylene having a density of 0.910 to 0.925 g/cm$^3$ and an ethylene-vinyl acetate copolymer containing at most 7 % by weight of vinyl acetate,

(b) 20 to 30 % by weight of at least one ethylene-vinyl acetate copolymer containing 20 to 30 % by weight of vinyl acetate and having a melt index of 0.5 to 7 g/10 min, and

(c) 10 to 20 % by weight of a styrene homopolymer having a melt index of 0.5 to 7 g/10 min.

2. Packaging film according to claim 1, characterised in that the amount of constituent (a) represents 60 to 65 % by weight, the amount of constituent (b) represents 25 to 30 % by weight and the amount of constituent (c) represents 10 % by weight, referred to the total weight of the polymers present.

3. Packaging film according to any of claims 1 and 2, characterised in that it additionally contains up to 10 % by weight of fillers and up to about 5 % by weight of adjuvants for packaging films, referred to the total weight of the polymer constituents (a), (b) and (c).

4. Heat-sealable packaging film producing a peelable joint, characterised in that the film is a laminate, at least one of the external faces of which is made from a film according to any of claims 1 to 3.

5. Package comprising (1) a container made from polystyrene or from high-impact polystyrene and having a base and a side wall which extends upwardly therefrom and terminates at its upper end in a radially outwardly directed flange and (2) a covering film for said container, which film is heat-sealed to the said flange by a peelable joint, characterised in that the covering film is made from a packaging film according to any of claims 1 to 4.

## Ansprüche

1. Eine lösbare Fuge bildende heisssiegelbare Verpackungsfolie, gekennzeichnet durch eine Zusammensetzung aus

(a) 50 bis 70 Gew.% mindestens eines Äthylenpolymers mit einem Fliessindex von 0,5 bis 7 g/10 min, das ausgewählt ist aus Polyäthylen einer Dichte von 0,910 bis 0,925 g/cm$^3$ und einem Äthylen-Vinylacetat-Copolymer, das höchstens 7 Gew.% Vinylacetat enthält,

(b) 20 bis 30 Gew.% mindestens eines Äthylen-Vinylacetat-Copolymers, das 20 bis 30 Gew.% Vinylacetat enthält und einen Fliessindex von 0,5 bis 7 g/10 min besitzt, und

(c) 10 bis 20 Gew.% eines Styrol-Homopolymers mit einem Fliessindex von 0,5 bis 7 g/10 min.

2. Verpackungsfolie nach Anspruch 1, dadurch gekennzeichnet, dass die Menge des Bestandteiles (a) 60 bis 65 Gew.%, die Menge des Bestandteiles (b) 25 bis 30 Gew.% und die Menge des Bestandteiles (c) 10 Gew.% in bezug auf das Gesamtgewicht des vorhandenen Polymeren ausmacht.

3. Verpackungsfolie nach irgendeinem der Anspruch 1 und 2, dadurch gekennzeichnet, dass die zudem bis zu 10 Gew.% Füllstoff und bis zu ca. 5 Gew.% Zusatzstoffe für Verpackungsfolien in bezug auf das Gesamtgewicht der Polymerbestandteile (a), (b) und (c) enthält.

4. Eine lösbare Fuge bildende heisssiegelbare Verpackungsfolie, dadurch gekennzeichnet, dass die Folie eine Verbundfolie ist, wobei wenigstens eine der Aussenseiten der Verbundfolie aus einer Verpackungsfolie nach irgendeinem der Ansprüche 1 bis 3 gebildet ist.

5. Verpackung, bestehend aus (1) einem Behälter aus Polystyrol oder schlagfestem Polystyrol, der einen Boden und eine sich davon nach oben erstreckende und an ihrem oberen Ende in einem radial nach aussen gerichteten Rand endende Seitenwand besitzt, sowie aus (2) einem Abdeckblatt für den Behälter, welches mit dem Rand durch Heissversiegelung lösbar verbunden ist, dadurch gekennzeichnet, dass das Abdeckblatt aus einer Verpackungsfolie nach irgendeinem der Ansprüche 1 bis 4 gebildet ist.